# EUROPEAN PATENT APPLICATION

(11) **EP 1 700 624 A1**
(43) Date of publication of application: **13.09.2006**
(21) Application number: 04801650.5
(22) Date of filing: 03.12.2004
(51) Int. Cl.: A63B 71/06

(54) **COMMUNICATION SYSTEM USING BONE CONDUCTION SPEAKER**

(30) Priority: 04.12.2003 JP 2003405870
(71) Applicant: Temco Japan Co., Ltd., Tokyo 168-0062 (JP)
(72) Inventor: WAKABAYASHI, Tetsuo c/o Temco Japan Co., Ltd., 1680062 Tokyo (JP)
(74) Representative: Bentz, Jean-Paul
(86) International application number: PCT/JP2004/018429
(87) International publication number: WO 2005/053800

(57) **Abstract**

An object is to provide a communication system using a bone conduction speaker. The system is **characterized by** enabling its user to catch sounds from a monitor without putting any person around the user to inconvenience when the user enjoys exercises. The user wears a receiving means in a manner such that the user can immediately respond to an instruction issued from an instructor or the like. This system is applicable to various types of fitness machines and the like. The system comprises a receiving means mounted on the user's head; and, a transmitting means mounted on a machine having the monitor. The receiving means includes: the bone conduction speaker mounted on the user's headband; a receiving portion; an amplifier unit; and, a battery. The user can catch a sound signal output of the transmitting means during the user's own performance, by receiving the output through the receiving means.

## Description

### Technical Field:

The present invention relates to a communication system using a bone conduction speaker, and more particularly to a communication system using a bone conduction speaker, which enables its user to catch a voice sound issued from a voice sound output means provided in the system employed in a fitness machine such as a running machine, an aerobic bicycle or like machines, wherein the user is capable of catching the voice sound directed to the user, without any other person' s being aware of the voice sound, wherein the person is around the user.

### Background Art:

Immense strides and popularization have been made in recent years in the art of fitness machines. For example, it becomes possible for a user of the fitness machine to enjoy a drama program and like programs on television using a monitor of the fitness machine while the user conducts his or her physical training or exercise using the fitness machine. It is also possible for the user to enjoy any game program carrying the contents of his or her physical training or exercise. In other words, further development of the fitness machine as an entertaining and training means, which enables the user to enjoy various contents of game programs, will be expected (see Japanese Patent application Laid-open No. 2002-272876).

As described above, the fitness machine becomes more attractive in the product market, providing a product excellent in entertainment. In use, however, there is a problem in the art in that: when the user wants to enjoy a voice sound on television or the like while conducting his or her physical exercise, it is necessary for the user to considerably increase the sound level or volume of the voice sound in order to catch the sound. Due to this, in the case where a plurality of fitness machines are disposed adjacent to each other in use, the sounds issued from adj acent ones of the machines interfere with each other, causing discomfort to any person around the individual users. In order to solve this problem, it is possible for the user to use an earphone or a headphone in order to catch the sound having been reduced in sound level or volume. However, the use of such earphone or headphone may interfere with the user's physical motion in exercise, be cumbersome in use, and further make it hard for the user to catch the instructor's voice in exercise, which makes it difficult for the user to immediately respond to the instructions issued from the instructor during his or her exercise.

### DISCLOSURE OF THE INVENTION

As described above, the conventional types of fitness machines and like machines having been employed in a sports club suffers from various kinds of problems. Consequently, it is an object of the present invention to provide a communication system using a bone conduction speaker, which is free from the above-mentioned problems, for example, without causing any discomfort to a person around the user while permitting the user himself or herself to catch any voice sound issued from a monitor in a condition in which the user is capable of wearing a receiving means in a manner such that he or she can immediately respond to instructions or the like issued from an instructor, wherein the system is capable of being applied to various types of fitness machines and like machines.

In the present invention, its object described above is accomplished by providing a communication system using a bone conduction speaker, which system is characterized by comprising a receiving means mounted on a head portion of a user; and, a transmitting means mounted on a machine provided with a voice sound output means which the user uses, wherein the receiving means includes: a bone conduction speaker carried on a headband, the headband being mounted on the head portion of the user; a receiving portion; an amplifier unit; and, a battery, wherein a voice sound output issued from the transmitting means when the user enjoys his or her exercise is received through the receivingmeans, which enables the user to catch the voice sound output.

The object of the present invention is also accomplished by providing a communication system using a bone conduction speaker characterized by comprising a first transmitting/receiving means mounted on a head portion of a user; and, a second transmitting/receiving means mounted on a machine provided with a voice sound output means which the user uses, wherein the first transmitting/receiving means includes: a bone conduction speaker carried on a headband, the headband being mounted on the head portion of the user; a transmitting/receiving portion; an amplifier unit; and, a battery, wherein a voice sound output issued from the second transmitting/receiving means during the user' s exercise is received through the first transmitting/receiving means, which enables the user to catch the voice sound output.

In general, communication between the transmitting means (or the first transmitting/receiving means) and the receiving portion (or the second transmitting/receiving means) is realized by means of an infrared ray. Preferably, the headband is covered in its outer surface with a fashionable covering. Further, it is possible for the second transmitting/receiving means to include a means for measuring the number of the user' s pulsations in his or her physical exercise.

### BRIEF DESCRIPTION OF THE DRAWING

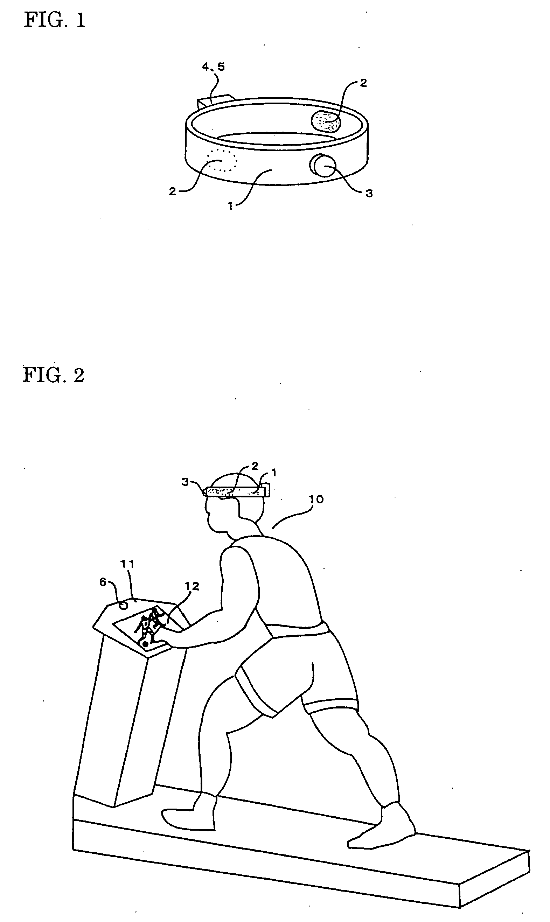

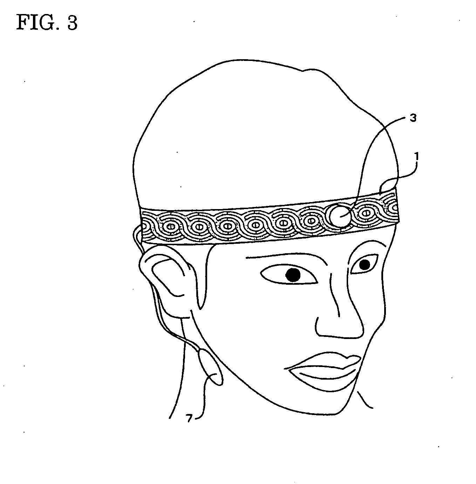

Fig. 1 is a perspective view of the receiving means according to the embodiment of the present invention. Fig. 2 is a view showing the fitness machine according to the embodiment of the present invention in use. Fig. 3 is a view showing the receiving means according to the embodiment of the present invention in use.

### BEST MODE FOR CARRYING OUT THE INVENTION

With reference to the accompanying drawings, a preferred embodiment of a system of the present invention will be described hereinbelow in the case where the system is applied to a fitness machine. Fig. 1 is a perspective view of a receiving means according to an embodiment of the present invention, wherein the receiving means is mounted on a head portion of a user. The receiving means mentioned above is constructed of a plurality of its constituent elements, which comprise: a bone conduction speaker 2; a receiving portion 3; an amplifier unit 4; and, a battery 5. As shown in Fig.1, all these constituent elements are mounted on a headband 1, which is adapted for wear on the head portion of the user without any fear that the headband 1 falls off the head portion of the user in his or her gymnastic or physical exercise.

The headband 1 is made of a suitable material, for example such as flexible plastics, rubber, fabrics and/or like materials. In size, it is preferable for the headband 1 to be adjustable in its length or diameter so as to neatly fit any one of the users varying in size of the head portion. In order to have the headband 1 be adjustable in diameter, it is possible to make the headband 1 expansible partially or entirely, for example. It is also possible to cut the headband 1 partially so as to prepare a pair of cut end portions, which portions are detachably connected with each other through a suitable fastening means such as a Velcro fastener or like fastening means.

As for the bone conduction speaker 2, one or a plurality of the bone conduction speakers 2 may be mounted on the headband 1 in a position or positions where the bone conduction speaker 2 is brought into contact with a side head portion of the user when the user wears the headband 1. In size or diameter, the headband 1 is so adjusted as to have the bone conduction speakers 2 brought into a slight press-contact with the side head portion of the user in positions around his or her ears. As a result, the user may catch a voice sound signal issued from this bone conduction speaker, wherein the voice sound signal takes a form of a bone conduction sound.

On the other hand, the receiving portion 3 is preferably mounted on the headband 1 in a front position of an outer peripheral surface of the headband 1. In general, the infrared ray is used as a carrier means or medium for transmission of the voice sound in this system of the present invention. The receiving portion 2 is constructed of a photodiode and like components. As shown in Fig. 2, an upper surface of a main body 11 of the fitnessmachine is oppositely disposed from the user 10 to form a monitor-mounting surface. Mounted in this monitor-mounting surface is a transmitting portion 6, which is constructed of an LED and like components corresponding to the receiving portion 3. Such a transmitting portion 6 is connected with a voice sound output terminal (not shown) of the main body 11 of the fitness machine through a wire of cord. It is possible to have the transmitting portion 6 incorporated previously in the main body 11 of the fitness machine. It is also possible to mount the transmitting portion 6 on the main body 11 later. Incidentally, in most cases, a monitor 12 is mounted in the upper surface (i.e., monitor-mounting surface) of the main body 11 of the fitness machine.

As is clear from Figs. 2 and 3, the receiving means of the present invention having the above construction is firmly mounted on the head portion of the user through the headband 1. Further, by adjusting the headband 1 in length or diameter, it is possible to have the headband 1 brought into a slight press-contact with the head portion of any one of the users, which makes it possible for the user to have his or her headband 1 neatly fit to the head portions of the individual users without causing any discomfort to the users, and without any fear that the headband 1 falls off the head portion of the user even when the user enjoys hard exercises, for example such as running or like physically hard exercises.

Preferably, the voice sound signal issued from the main body 11 of the fitness machine is transmitted from a transmitting portion 4 of the fitness machine in a manner such that: the infrared ray is employed as a carrier means of the voice sound signal; and, the infrared ray is focused only on the individual users so as to enable the individual users to clearly catch the voice sound signal. The voice sound signal thus issued from the transmitting portion 4 is then received in the receiving portion 3, demodulated therein, transmitted to the bone conduction speaker 2, and transformed into kinetic vibrations in the speaker 2, which vibrations are transmitted to the user's skull and act on the user's eardrum or on the three semicircular canals contained in the user' s inner ear, which enables the user to recognize the vibrations as a voice sound.

As described above, the user' s receiving operation of the voice sound is realized through bone conduction according to the present invention, so that it is not possible for any person other than the user to catch this voice sound. In addition to the above, as for the user himself or herself, it is possible for the user to directly catch any instructor's voice since the external auditory canal of the user's ear is not closed, whereby the user may enjoy the advantages of the present invention in directly catching the instructor's voice.

As shown in Fig. 3, it is possible to cover the headband 1 with a fashionable covering in use, wherein the headband 1 functions as the receivingmeans. When the fashionable covering is used together with a sports wear, it is recognized that the covering and the sports wear are a good match, causing no discomfort to the user or wearer naturally in function and in fashion too. In addition, since the covering itself is washable, it is advantageous in sanitary point of view to use the covering in combination with the receiving means adapted for rental use.

On the other hand, in most cases, the fitness machine used for the purpose of enjoying physical exercises as described above is also used for the other purposes of conducting a dieting restriction training, a rehabilitation training and like trainings. In such training cases, it has been known that an aerobic exercise is effective. In order to realize such an effective aerobic exercise, it is necessary to impose a physical exercise load ranging from about 40 % to about 60% of the maximum pulsation number of the user to him or her, as is already known in the art.

Consequently, as shown in Fig. 3, in order to obtain the number of pulsations of the user when he or she uses the fitness machine, a pulsation sensor 7 is mounted on a principal artery of the user' s neck portion. By selecting a method for measuring the number of the user' s pulsations by means of the pulsation sensor 7 thus mounted as described above, it is possible to transmit the thus determined number of the user's pulsations to the transmitting/receiving portion 6 of the main body of the fitness machine through the transmitting/receiving portion 3 of the headband mounted on the head portion of the user, provided that: the receiving portion 3 and the transmitting portion 6 are replaced with the transmitting/receiving portion 3 and the transmitting/receiving portion 6, respectively, each of the receiving portion 3 and the transmitting portion 6 being replaced with a bi-directional type of infrared data transmitting device; and, the pulsation sensor 7 has its output portion connected with the transmitting/receiving portion 3 through a cable and the like.

As a result, it is possible for the present invention to omit the use of any cable for connecting the main body of the fitness machine with a conventional type of pulsation sensor. Due to this, there is no fear that the headband 1 of the present invention interferes with the user' s physical motion during his or her exercise. Since the pulsation sensor 7 is integrally formed with the headband in the head portion of the user to form a headband unit, it is possible for the user to conduct all the maintenance services such as washing and like services of this unit. This is another advantage of the present invention. In this case, it is necessary to dispose the pulsation sensor 7 on the user's neck portion adjacent to his or her principal artery, which enables the sensor 7 to determine the number of the user's pulsations in neck portion during his or her exercise.

Incidentally, in the description of the above embodiment, the transmitting means is connected with the receiving means through the infrared ray. However, it is also possible for the present invention to connect these transmitting and receiving means though any other suitable connection means in addition to the infrared ray. For example, such suitable connection means may be constructed of a wire or cord. In this case, it is possible for the main body 11 of the fitness machine to supply an electric power to the unit of the headband 1 and sensor 7, which enables the receiving means 3 to omit both the amplifier unit 4 and the battery 5 thereof and thereby realizing a considerable weight reduction of the receiving means to offer another advantage of the present invention. In the case where the cord is used in connecting the headband 1 with the sensor 7, it is preferable to dispose the receiving means on the main body 11 of the fitness machine in a position where the cord does not interfere with the user's physical motion in his or her exercise.

### INDUSTRIAL APPLICABILITY

According to the present invention, the bone conduction speaker is used in the present invention. Consequently, it is possible for the user to catch the voice sound of the monitor or the like without causing any discomfort to a person around the user in exercise. Since the user is permitted to keep his or her ear open in his or her exercise, it is possible for the user to immediately respond to the instructions issued from the instructor. Further, it is also possible to apply the present invention to various types of fitness machine. Furthermore, when the receiving means is covered with a fashionable covering, it is possible to make the headband free from any disorder in appearance when the headband is mounted on the head portion of the user or wearer.

## Claims

1. A communication system using a bone conduction speaker **characterized by** comprising a receiving means mounted on a head portion of a user; and, a transmitting means mounted on a machine provided with a voice sound output means which the user uses, wherein said receiving means includes: a bone conduction speaker carried on a headband, said headband being mounted on said head portion of the user; a receiving portion; an amplifier unit; and, a battery, wherein a voice sound output issued from said transmitting means during the user' s exercise is received through said receiving means, which enables the user to catch said voice sound output.

2. The communication system using the bone conduction speaker as set forth in claim 1, wherein said machine is constructed of a fitness machine.

3. The communication system using the bone conduction speaker as set forth in claim 1 or 2, wherein communication between said transmitting means and said receiving portion is realized by means of an infrared ray.

4. The communication system using the bone conduction speaker as set forth in any one of claims 1 to 3, wherein said headband is covered in its outer surface with a fashionable covering.

5. A communication system using a bone conduction speaker **characterized by** comprising a first transmitting/receiving means mounted on a head portion of a user; and, a second transmitting/receiving means mounted on a machine provided with a voice sound output means which the user uses, wherein said first transmitting/receiving means includes: a bone conduction speaker carried on a headband, said headband being mounted on said head portion of the user; a transmitting/receiving portion; an amplifier unit; and, a battery, wherein a voice sound output issued from said second transmitting/receiving means during the user's exercise is received through said first transmitting/receiving means, which enables the user to catch said voice sound output.

6. The communication system using the bone conduction speaker as set forth in claim 5, wherein said machine is constructed of a fitness machine.

7. The communication system using the bone conduction speaker as set forth in claim 5 or 6, wherein communication between said first transmitting/receiving means and said second transmitting/receiving means is carried out using an infrared ray.

8. The communication system using the bone conduction speaker as set forth in any one of claims 5 to 7, wherein said headband is covered in its outer surface with a fashionable covering.

9. The communication system using the bone conduction speaker as set forth in any one of claims 5 to 8, wherein said first transmitting/receiving means includes a pulsation sensor for measuring the number of the user' s pulsations in his or her physical exercise.
